# EUROPEAN PATENT APPLICATION

(11) **EP 4 033 309 A1**
(43) Date of publication of application: **27.07.2022**
(21) Application number: 22152092.7
(22) Date of filing: 18.01.2022
(51) Int. Cl.: G05B 15/02

(54) **UPDATABLE WEAPON MANAGEMENT SYSTEM AND OPERATING METHOD**

(30) Priority: 22.01.2021 US 202117155792
(71) Applicant: Hamilton Sundstrand Corporation, Charlotte, NC 28217-4578 (US)
(72) Inventor: DABKOWSKI, Gregory T., Westfield, MA (US); AVRITCH, Steven A., Bristol, CT, 06010 (US)
(74) Representative: Dehns

(57) **Abstract**

A weapon management system (10) includes a management device (12), interface units (14), software downloaded into the interface units, a power network (18), and a communication network (20). The power network (18) provides electrical power to the management device (12) and the interface units (14). The communication network (20) connects the management device (12) to the interface units (14) for transferring electrical signals and data between the components. The interface units (14) and the software downloaded into the interface units are highly reconfigurable, allowing for simple, easy, and fast configurability and expandability for evolving weapon systems. Further, the weapon management system (10) has the capability to add interface units to an existing architecture for expanding and evolving weapon systems.

## Description

### BACKGROUND

The present disclosure relates to weapon management systems, and more particularly to a highly configurable weapon management system.

Weapon management systems provide power and control for weapons on air, land, and sea-based vehicles as well as weapons at bases or other permanent structures. The weapon management system allows an operator to manage weapon configurations, program mission requirements, monitor system performance, and ensure safe operation of all weapons on the vehicle or at the base. Current weapon management systems include custom hardware built to interface with the vehicle/base, the weapon, and the support system. The custom hardware includes custom software that is configured to complete only specific tasks. After the custom hardware and software are installed on an air, land, or sea-based vehicle, the capabilities are limited to the requirements/capabilities designed into the hardware and software when initially built. The custom-built systems result in long lead times to design, test, and build the system. As weapon development is constantly changing, any changes to an existing system, to add new capability, requires a retrofit of existing hardware, long development cycles, and extensive testing. This quickly leads to phased obsolescence, limitations of capability, or a slow and costly retrofit campaign.

### SUMMARY

According to one aspect of the disclosure, a weapon management system for controlling the operation of armaments is disclosed. The weapon management system includes a management device, an interface unit, and a user interface. The management device includes a processor, an input port, an output port, a memory, and an operating system stored within the memory. The interface unit includes a processor, an input port, an output port, and a memory. The interface unit is electrically coupled to the management device and the interface unit is electrically coupled to an armament. The user interface is electrically coupled to the management device, and a user interacts with the user interface to cause the management device to send a command signal to the interface unit. The interface unit is configured to receive the command signal from the management device, store and process the command signal, and execute the command signal to cause an armament action.

According to another aspect of the disclosure, a method of operating a weapon management system to control operation of an armament is disclosed. The method includes: receiving, by a user interface, input from a user; transferring, through a communication network, a command signal from the user interface to an electrically coupled management device; storing and processing, by the management device, the command signal received from the user interface; transferring, through the communication network, the command signal from the management device to an electrically coupled interface unit; storing and processing, by the interface unit, the command signal received from the management device; and executing, by the interface unit, the command signal to cause an armament action.

### BRIEF DESCRIPTION OF THE DRAWINGS

FIG. 1 is a schematic block diagram of a weapon management system.
FIG. 2 is a detailed schematic block diagram of the weapon management system.

### DETAILED DESCRIPTION

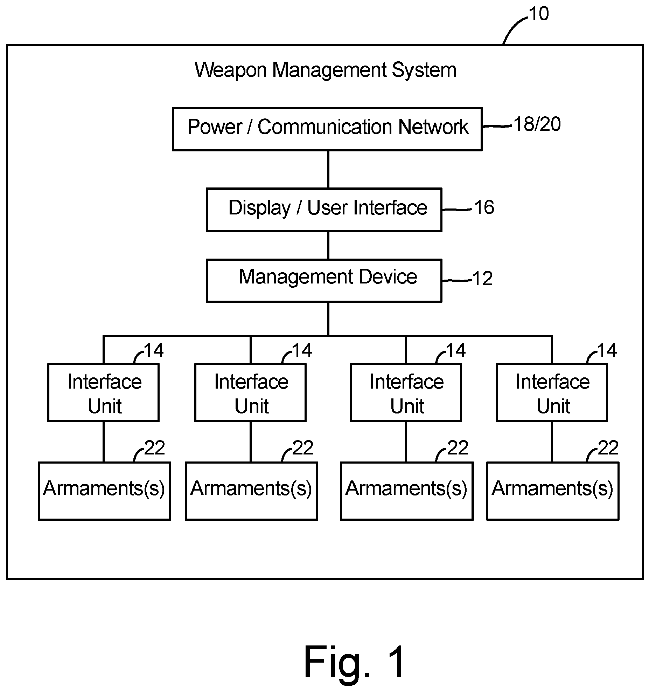

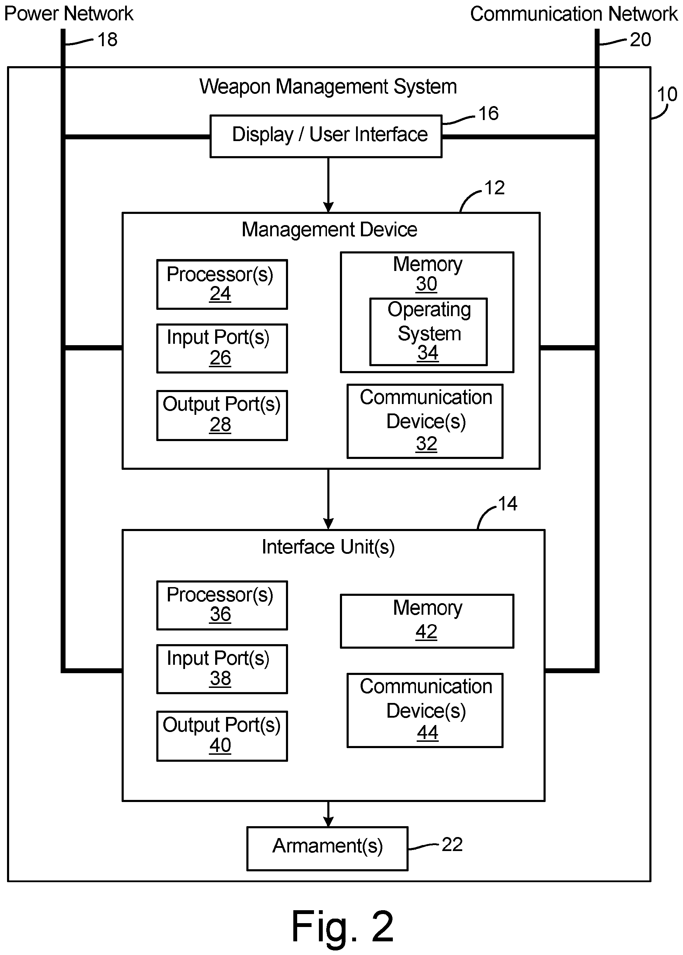

FIG. 1 is a schematic block diagram of weapon management system 10, hereinafter referred to as WMS 10. FIG. 2 is a more detailed schematic block diagram of WMS 10 shown in FIG. 1. FIGS. 1-2 will be discussed together. WMS 10 provides power and control for weapons on air, land, and sea-based vehicles, as well as weapons at military bases or other permanent structures. WMS 10 allows an operator to manage weapon configurations, program mission requirements, monitor system performance, and ensure safe operation of weapons, among many other functions not specifically described. The subsequent disclosure focuses on embodiments in which WMS 10 is positioned on and configured to be utilized with air, land, and/or sea-based vehicles. But it is to be understood that WMS 10 can be utilized with military bases or other permanent or semi-permanent structures.

WMS 10 includes management device 12, interface unit 14, user interface 16, power network 18, and communication network 20. Management device 12 is a controller that is configured to govern operation of WMS 10. More specifically, management device 12 is configured to govern vehicle control (flight control on an aircraft), vehicle management, high-performance computing, and other functionality of WMS 10 on an air, land, or sea-based military vehicle. Management device 12 is electrically coupled to both interface unit 14 and user interface 16, and management device 12 transfers electrical signals or commands to and from both interface unit 14 and user interface 16. Interface unit 14 is a controller that is configured to govern operation of armament 22. Interface unit 14 is electrically coupled to armament 22 and interface unit 14 transfers electrical signals or commands to and from armament 22. User interface 16 is electrically coupled to management device 12, and user interface 16 is configured to send a command signal to management device 12 upon operator interaction with user interface 16. User interface 16 can be one or more of a button, switch, knob, lever, touchscreen display, remote, computer mouse, keyboard, joystick, microphone, or graphical user interface, among other options. As such, an operator interacts with user interface 16 to control operation of WMS 10 through management device 12 and interface unit 14.

In the embodiment shown, WMS 10 includes user interface 16 electrically coupled to management device 12 and management device 12 electrically coupled to interface unit 14. An operator interacts with user interface 16 to send a command signal to management device 12, causing another command signal to be sent from management device 12 to interface unit 14. In another embodiment, WMS 10 can include user interface 16 electrically coupled directly to interface unit 14, such that an operator interacting with user interface 16 causes a command signal to be sent from user interface 16 directly to interface unit 14. In such an embodiment, management device 12 may or may not be included within WMS 10, and interface unit 14 can operate and govern operation of armament 22 without receiving command signals from management device 12. The following disclosure will focus on the embodiment shown in FIGS. 1-2, in which user interface 16 is electrically coupled to management device 12 and management device 12 is electrically coupled to interface unit 14.

Armament 22 can be any one or more of a military weapon, a weapon delivery system, or any other military equipment on an air, land, or sea-based military vehicle. For example, armament 22 could comprise a weapon bay door control mechanism, a weapon launcher control mechanism, arming of a weapon, release of a weapon, locking or unlocking of an ammunition rack, controlling weapon rails, controlling munition dispensers, controlling a turreted gun, among many other possible functions. In the embodiment shown in FIG. 1, WMS 10 includes four interface units 14, with each of the interface units 14 electrically coupled to a single armament 22. In another embodiment, WMS 10 can include more than or less than four interface units 14, with each of the interface units 14 electrically coupled to an armament 22. In yet another embodiment, each interface unit 14 can be electrically coupled to more than one armament 22 to control operation of a plurality of armaments 22 on an air, land, or sea-based military vehicle.

Power network 18 is electrically coupled to each of management device 12, interface unit 14, user interface 16, and armament 22. Power network 18 is configured to provide electric energy to each of management device 12, interface unit 14, user interface 16, and armament 22 to power each of management device 12, interface unit 14, user interface 16, and armament 22 during operation of WMS 10. Power network 18 can include a power source (such as a battery, alternator, generator, etc.) electrically coupled to each of management device 12, interface unit 14, user interface 16, and armament 22 through a power cord or electrical cable to transfer electrical energy to each component. Communication network 20 is electrically coupled to each of management device 12, interface unit 14, and user interface 16. Communication network 20 is configured to transfer electrical signals or commands between each of management device 12, interface unit 14, and user interface 16. In the embodiment shown, communication network 20 is electrically coupled to each of management device 12, interface unit 14, and user interface 16 through electrical cables or electrical wire, such as an ethernet cable, to transfer communication signals to and from each component. In another embodiment, communication network 20 can be communicatively coupled to each of management device 12, interface unit 14, and user interface 16 through a wireless communication network to transfer communication signals wirelessly to and from each component. Communication network 20 communicatively interconnects each of management device 12, interface unit 14, and user interface 16 to facilitate the transfer of commands, electrical signals, and/or data between the components of WMS 10.

Referring to FIG. 2, WMS 10 includes management device 12, interface unit 14, user interface 16, power network 18, and communication network 20. Management device 12 includes processor(s) 24, input port(s) 26, output port(s) 28, memory 30, and communication device(s) 32. Further, memory 30 of management device 12 can include operating system 34 stored within memory 30. Interface unit 14 includes processor(s) 36, input port(s) 38, output port(s) 40, memory 42, and communication device(s) 44. As described with reference to FIG. 1, user interface 16 can be one or more of a button, switch, knob, lever, touchscreen display, remote, computer mouse, keyboard, joystick, microphone, or graphical user interface, among other options. Further, as described with reference to FIG. 1, power network 18 and communication network 20 can both be electrically coupled to each of management device 12, interface unit 14, user interface 16, and armament 22 to transfer electric energy and electrical signals or commands, respectively.

As illustrated in FIG. 2, management device 12 can include processor(s) 24, input port(s) 26, output port(s) 28, memory 30, and communication device(s) 32. However, in certain examples, management device 12 can include more or fewer components than components 24, 26, 28, 30, and 32. Processor(s) 24, in one example, are configured to implement functionality and/or process instructions for execution within management device 12. For instance, processor(s) 24 can be capable of processing instructions stored in memory 30. Examples of processor(s) 24 can include any one or more of a microprocessor, a controller, a digital signal processor (DSP), an application specific integrated circuit (ASIC), a field-programmable gate array (FPGA), or other equivalent discrete or integrated logic circuitry. Management device 12, in some examples, also includes input port(s) 26 and output port(s) 28. Input port(s) 26 are configured to receive command signals from user interface 16 and the received command signals are then stored within memory 30 for processing by processor(s) 24. Output port(s) 28, in one example, are configured to send command signals from management device 12 to interface unit 14. Output port(s) 28, in another example, are configured to provide output data to the operator through user interface 16 or another output device. Examples of output devices can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines.

Memory 30 can be configured to store information within management device 12 during operation of WMS 10. Memory 30, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 30 is a temporary memory, meaning that a primary purpose of memory 30 is not long-term storage. Memory 30, in some examples, is described as volatile memory, meaning that memory 30 does not maintain stored contents when power to management device 12 is turned off. Examples of volatile memories can include random access memories (RAM), dynamic random-access memories (DRAM), static random-access memories (SRAM), and other forms of volatile memories. In some examples, memory 30 is used to store program instructions for execution by processor(s) 24. Memory 30, in one example, is used by software or applications running on management device 12 (e.g., a software program implementing a system architecture) to temporarily store information during program execution. Memory 30, in some examples, also includes one or more computer-readable storage media. Memory 30 can be configured to store larger amounts of information than volatile memory. Memory 30 can further be configured for long-term storage of information. In some examples, memory 30 include non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

Management device 12, in some examples, also includes communication device(s) 32. Management device 12, in one example, utilizes communication device(s) 32 to communicate with external devices via one or more networks, such as one or more wireless or wired networks or both. Communication device(s) 32 can be a network interface card, such as an Ethernet card, an optical transceiver, a radio frequency transceiver, or any other type of device that can send and receive information. Other examples of such network interfaces can include Bluetooth, 3G, 4G, 5G, and Wi-Fi radio computing devices as well as Universal Serial Bus (USB).

As illustrated in FIG. 2, interface unit 14 can include processor(s) 36, input port(s) 38, output port(s) 40, memory 42, and communication device(s) 44. However, in certain examples, interface unit 14 can include more or fewer components than components 36, 38, 40, 42, and 44. Processor(s) 36, in one example, are configured to implement functionality and/or process instructions for execution within interface unit 14. For instance, processor(s) 36 can be capable of processing instructions stored in memory 42. Examples of processor(s) 36 can include any one or more of a microprocessor, a controller, a digital signal processor (DSP), an application specific integrated circuit (ASIC), a field-programmable gate array (FPGA), or other equivalent discrete or integrated logic circuitry. Interface unit 14, in some examples, also includes input port(s) 38 and output port(s) 40. Input port(s) 38 are configured to receive command signals from management device 12 (or user interface 16) and the received command signals are then stored within memory 42 for processing by processor(s) 36. Output port(s) 40, in one example, are configured to send command signals from interface unit 14 to armament 22. Output port(s) 40, in another example, are configured to provide output or feedback data to management device 12, indicating whether the command signal received from management device 12 was completed. Output port(s) 40, in yet another example, are configured to provide output data to the operator through user interface 16 or another output device. Examples of output devices can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines.

Memory 42 can be configured to store information within interface unit 14 during operation of WMS 10. Memory 42, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory 42 is a temporary memory, meaning that a primary purpose of memory 42 is not long-term storage. Memory 42, in some examples, is described as volatile memory, meaning that memory 42 does not maintain stored contents when power to interface unit 14 is turned off. Examples of volatile memories can include random access memories (RAM), dynamic random-access memories (DRAM), static random-access memories (SRAM), and other forms of volatile memories. In some examples, memory 42 is used to store program instructions for execution by processor(s) 36. Memory 42, in one example, is used by software or applications running on interface unit 14 (e.g., a software program implementing a system architecture) to temporarily store information during program execution. Memory 42, in some examples, also includes one or more computer-readable storage media. Memory 42 can be configured to store larger amounts of information than volatile memory. Memory 42 can further be configured for long-term storage of information. In some examples, memory 42 includes non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

Interface unit 14, in some examples, also includes communication device(s) 44. Interface unit 14, in one example, utilizes communication device(s) 44 to communicate with external devices via one or more networks, such as one or more wireless or wired networks or both. Communication device(s) 44 can be a network interface card, such as an Ethernet card, an optical transceiver, a radio frequency transceiver, or any other type of device that can send and receive information. Other examples of such network interfaces can include Bluetooth, 3G, 4G, 5G, and Wi-Fi radio computing devices as well as Universal Serial Bus (USB).

In operation, an operator within the air, land, or sea-based military vehicle interacts with user interface 16 to initiate an action of armament 22. The interaction with user interface 16 causes a command signal to be transferred from user interface 16, through communication network 20, and to management device 12. The command signal is received through input port(s) 26 of management device 12, stored within memory 30 of management device 12, and then processed by processor(s) 24 of management device 12. A second command signal is then sent from management device 12 through output port(s) 28 of management device 12, through communication network 20, and to interface unit 14. The second command signal is received through input port(s) 38 of interface unit 14, stored within memory 42 of interface unit 14, and then processed by processor(s) 36 of interface unit 14. Interface unit 14 proceeds to execute the processed second command signal by transferring an action signal through output port(s) 40 to armament 22, causing an armament action to occur. As discussed, an armament action could be any one or more of arming a weapon, releasing a weapon, locking or unlocking an ammunition rack, controlling weapon rails, and/or controlling munition dispensers, among many other possible actions.

After armament 22 performs the commanded armament action, a summary report is sent from armament 22 to interface unit 14 to be stored within memory 42 and processed by processor(s) 36. Interface unit 14 then generates and stores a feedback data signal based on the summary report indicating whether execution of the armament action was successfully completed. The feedback data signal is transferred from interface unit 14, through communication network 20, and to management device 12. Management device 12 receives, stores, and processes the feedback data signal that was received from interface unit 14 and armament 22. Management device 12 transfers an electrical signal through communication network 20 to user interface 16, indicating to the user whether execution of the armament action was successfully completed. As such, an operator interacts with user interface 16 to initiate an armament action, management device 12 and interface unit 14 receive, store, process, and output communication/data signals, and a feedback data signal is sent back to the operator indicating whether execution of the armament action was successfully completed. Further, in other examples, the feedback data signal can be a communication/data signal from armament 22 indicating the type of weapon and/or component, model number of the weapon and/or component, or any other information regarding the weapon and/or component. The operational process of WMS 10 can be completed a plurality of times to complete a plurality of tasks and/or armament actions during operation of WMS 10 on an air, land, or sea-based military vehicle.

As discussed, management device 12 is configured to govern vehicle control (i.e., aircraft flight control), vehicle management, high-performance computing (i.e., autonomous vehicle control, identifying and tracking enemies, enemy fire protection and avoidance, vision technologies, etc.), and WMS 10 on an air, land, or sea-based military vehicle. As such, management device 12 is configured to manage and control processes or functions on the military vehicle that require significant processing power/requirements. Management device 12 includes operating system 34 downloaded into and stored within memory 30 of management device 12. Operating system 34 is a software program that is configured to manage all operation of WMS 10. Operating system 34 manages and controls interface unit 14, which manages and controls operation of armament 22. Operating system 34 is configured such that any number of interface units 14 can be controlled and managed by operating system 34. Further, operating system 34 is configured such that new or updated weapons/weapon capabilities can be downloaded and added to operating system 34 at any time. Although not specifically described or shown in the figures, it is to be understood that interface units 14 can each include the same or similar operating system 34 as management device 12. As such, each interface unit 14 can include operating system 34 downloaded into interface unit 14 and with operating system 34 configured to manage operations of WMS 10, such as the operation of user interface 16, management device 12, and armament 22.

Interface units 14 are configured to govern action of armaments 22, which require less processing power/requirements than functions performed by management device 12. Therefore, interface units 14 can be smaller in size than management device 12 and interface units 14 can be positioned anywhere on the vehicle where there is free or open space. Communication network 20 electrically couples each interface unit 14 to at least one armament 22 to govern operation and control action of each armament 22. Interface units 14 can vary in size, depending on the capability and processing requirements for each interface unit 14. A smaller interface unit 14 may include less memory and processing power, allowing the smaller interface unit 14 to perform limited functions, such as controlling weapon bay door functionality, arming and release of a weapon, lock or unlocking of a bomb rack. A larger interface unit 14 could include more memory and processing power (i.e., more or faster processors), as compared to the smaller interface unit 14. The larger interface unit 14 expands on the capabilities of the smaller interface unit 14, allowing the larger interface unit 14 to perform more complex tasks. For example, a larger interface unit 14 could be used for turreted gun control, which provides motor control for positioning of the gun turret, chambering and clearing of rounds, firing of the gun, and ballistic calculations-based impact feedback to reposition the turret to hit its desired target. Therefore, interface units 14 can vary in size, memory, and processing power depending on the capability requirements, with larger interface units 14 including more memory and processing power to complete more complex tasks.

Further, each interface unit 14 includes a reconfigurable circuit card with software downloaded into and stored within the reconfigurable circuit card. In some examples, the software is downloaded and stored within memory 42 of each interface unit 14. The software downloaded into each interface unit 14 is processed by processor(s) 36 and the software governs what occurs when interface unit 14 receives specific data or commands. In other words, the software downloaded into each interface unit 14 designates a task to be performed by interface unit 14 upon receiving a command signal from management device 12. The software within each interface unit 14 is downloaded and transferred to each interface unit 14 through communication network 20. More specifically, the software is downloaded into management device 12 from an external source (external computer/controller), stored within memory 30 of management device 12, transmit through output port(s) 28 of management device 12, and transferred through communication network 20 to interface unit 14. Input port(s) 26 of interface unit 14 receive the software and store the software in memory 42 of interface unit 14 for processing by processor(s) 36. The software within interface unit 14 allows interface unit 14 to complete tasks and provide armament action commands to armament 22. Thus, the software within interface unit 14 governs the functionality and capabilities of each interface unit 14.

Traditional interface units include software that allows the traditional interface units to complete a limited number of specified tasks. The software within the traditional interface units cannot be updated and new capabilities cannot be added to traditional interface units without removing the interface unit and replacing the unit with a new custom-built interface unit with updated software. In contrast, WMS 10 includes reconfigurable interface units 14, allowing new and updated functionality and capabilities to be added to interface unit 14 at any time without removing interface unit 14 from the vehicle in which it is installed. To add a new weapon or updated functionality and capabilities to a military vehicle, new or updated software is downloaded into each interface unit 14. The new or updated software includes new computer code that allows each input port(s) 38 and output port(s) 40 of interface units 14 to perform new functions. In an example, the software downloaded into the reconfigurable circuit cards can be updated to alter the task to be performed by interface unit 14 upon receiving a command signal from management device 12. The new software can be downloaded into each interface unit 14 at any time through communication network 20. As such, interface units 14 can remain coupled to and positioned within a military vehicle while the new or updated software is downloaded into the existing interface unit 14. Therefore, new or updated software (new capability and functionality) can be added to WMS 10 at any time after interface unit 14 has been installed within a military vehicle and connected to communication network 20.

Further, the new or updated software within each interface unit 14 can easily be updated through a development environment installed within WMS 10. The development environment allows a user to write new or updated code or application software for interface units 14 that defines the functionality of each of processor(s) 36, input port(s) 38, output port(s) 40, memory 42, and communication device(s) 44. The development software includes an easily understandable programming language, allowing users to develop their own coded set of instructions to produce various outputs. The various outputs could include controlling the functionality of a weapon, controlling what action occurs when a button on user interface 16 is interacted with, controlling what processor(s) 36, input port(s) 38, output port(s) 40, memory 42, or communication device(s) 44 do when receiving data/information, among many other outputs. The development environment allows for rapid scalability and expansion of WMS 10 by allowing users to develop and download their own coded set of instruction into interface units 14 to produce a desired output.

WMS 10 is a highly configurable system, meaning new or updated armaments 22 and armament capabilities can easily and efficiently be added to an evolving weapon system of a military vehicle or a base. In contrast, traditional weapon management systems include custom built interface units that are configured to perform only specific armament actions. The custom-built interface units can only perform those armament actions because different weapons have different input, output, and logic control requirements, prohibiting certain uses and functions without new or updated hardware and software. To add capabilities to a traditional weapon management system, a new interface unit is custom built with new software installed in the new interface unit, allowing the new interface unit to perform the new capabilities. WMS 10 is advantageous over traditional weapon management systems because the capabilities and functionality of interface units 14 are reconfigurable through software updates, allowing new weapons to be quickly added to a military vehicle, as compared to the traditional weapon management systems. Further, additional interface units 14 can be easily added to a military vehicle by connecting to the existing communication network 20. More specifically, communication network 20 can include a plurality of ports positioned throughout a military vehicle, such that a new interface unit 14 can be plugged into WMS 10 when a new weapon or new functionality is added to WMS 10. As such, WMS 10 is a highly capable, multicore processing system with an open system architecture that allows for added military weapons and capabilities through reconfigurable interface units 14.

### Discussion of Possible Embodiments

The following are non-exclusive descriptions of possible embodiments of the present invention.

A weapon management system including a management device, an interface unit, and a user interface. The management device includes a processor, an input port, an output port, a memory, and an operating system stored within the memory. The interface unit includes a processor, an input port, an output port, and a memory. The interface unit is electrically coupled to the management device and the interface unit is electrically coupled to an armament. The user interface is electrically coupled to the management device, and a user interacts with the user interface to cause the management device to send a command signal to the interface unit. The interface unit is configured to receive the command signal from the management device, store and process the command signal, and execute the command signal to cause an armament action.

The weapon management system of the preceding paragraph can optionally include, additionally and/or alternatively, any one or more of the following features, configurations and/or additional components:

The interface unit is configured to: receive command signals from the management device through the input port of the interface unit; store the command signals from the management device within the memory of the interface unit; process the command signals from the management device within the processor of the interface unit; and execute the command signals by sending an action signal through the output port of the interface unit to the armament.

The processor of the interface unit includes a reconfigurable circuit card; the reconfigurable circuit card includes software downloaded into the reconfigurable circuit card designating a task to be performed by the interface unit upon receiving the command signal from the management device; and the software downloaded into the reconfigurable circuit card can be updated to alter the task to be performed by the interface unit upon receiving the command signal from the management device.

Updating the software downloaded into the reconfigurable circuit card comprises: downloading updated software from an external source into the memory of the management device; transferring the updated software from the management device to the electrically coupled interface unit; receiving the updated software through the input port of the interface unit; and storing the updated software in the memory of the interface unit for use by the processor of the interface unit.

The weapon management system includes a plurality of interface units each electrically coupled to the management device, and wherein each of the plurality of interface units is electrically coupled to at least one armament.

The user interface is one or more of a button, switch, knob, lever, touchscreen display, remote, computer mouse, keyboard, joystick, microphone, or graphical user interface.

A power network electrically coupled to the management device, the interface unit, and the user interface; and a communication network electrically coupled to the management device, the interface unit, and the user interface.

The power network is configured to provide electric energy to each of the management device, the interface unit, and the user interface to power each of the management device, the interface unit, and the user interface during operation of the weapon management system.

The communication network is configured to transfer the command signals between each of the management device, the interface unit, and the user interface.

A feedback data signal is sent from the interface unit to the management device after executing the command signal causing armament action, indicating whether execution of the armament action was successfully completed.

The weapon management system is positioned within an air, land, or sea-based military vehicle.

A method of operating a weapon management system to control operation of an armament is disclosed. The method includes: receiving, by a user interface, input from a user; transferring, through a communication network, a command signal from the user interface to an electrically coupled management device; storing and processing, by the management device, the command signal received from the user interface; transferring, through the communication network, the command signal from the management device to an electrically coupled interface unit; storing and processing, by the interface unit, the command signal received from the management device; and executing, by the interface unit, the command signal to cause an armament action.

The method of the preceding paragraph can optionally include, additionally and/or alternatively, any one or more of the following features, configurations, steps, and/or additional components:

Receiving, by the interface unit, the command signal from the management device through an input port of the interface unit; storing, by the interface unit, the command signal from the management device within a memory of the interface unit; processing, by the interface unit, the command signal from the management device within a processor of the interface unit; and executing, by the interface unit, the command signal by sending an action signal through an output port of the interface unit to the armament.

The processor of the interface unit includes a reconfigurable circuit card; the reconfigurable circuit card includes software downloaded into the reconfigurable circuit card designating a task to be performed by the interface unit upon receiving the command signal from the management device; and the software downloaded into the reconfigurable circuit card can be updated to alter the task to be performed by the interface unit upon receiving the command signal from the management device.

Updating the software downloaded into the reconfigurable circuit card comprises: downloading, by the management device, updated software from an external source into a memory of the management device; transferring, through the communication network, the updated software from the management device to the electrically coupled interface unit; receiving, by the interface unit, the updated software through the input port of the interface unit; and storing, by the interface unit, the updated software in the memory of the interface unit for use by the processor of the interface unit.

Generating and storing, by the interface unit, a feedback data signal indicating whether execution of the armament action was successfully completed; transferring, through the communication network, the feedback data signal from the interface unit to the electrically coupled management device; receiving, processing, and storing, by the management device, the feedback data signal from the interface unit; transferring, through the communication network, a signal from the management device to the electrically coupled user interface; and signaling, by the user interface, the outcome of execution of the armament action.

The weapon management device further comprises a power network electrically coupled to the management device, the interface unit, and the user interface; and the power network is configured to provide electric energy to each of the management device, the interface unit, and the user interface to power each of the management device, the interface unit, and the user interface during operation of the weapon management system.

The weapon management system includes a plurality of interface units each electrically coupled to the management device, and wherein each of the plurality of interface units is electrically coupled to at least one armament.

The user interface is one or more of a button, switch, knob, lever, touchscreen display, remote, computer mouse, keyboard, joystick, microphone, or graphical user interface.

The weapon management system is positioned within an air, land, or sea-based military vehicle.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A weapon management system (10) for controlling the operation of armaments, the weapon management system comprising:
a management device (12) comprising a processor (24), an input port (26), an output port (28), a memory (30), and an operating system stored within the memory;
an interface unit (14) comprising a processor (36), an input port (38), an output port (40), and a memory (42), wherein the interface unit is electrically coupled to the management device and the interface unit is electrically coupled to an armament (22); and
a user interface (16) electrically coupled to the management device, wherein a user interacts with the user interface to cause the management device to send a command signal to the interface unit;
wherein the interface unit (14) is configured to receive the command signal from the management device (12), store and process the command signal, and execute the command signal to cause an action by the armament (22).

2. The weapon management system of claim 1, wherein the interface unit (14) is configured to:
receive command signals from the management device through the input port (38) of the interface unit;
store the command signals from the management device within the memory (42) of the interface unit;
process the command signals from the management device within the processor (36) of the interface unit; and
execute the command signals by sending an action signal through the output port (40) of the interface unit to the armament (22).

3. The weapon management system of claim 1, wherein:
the interface unit (14) includes a reconfigurable circuit card;
the reconfigurable circuit card includes software downloaded into the reconfigurable circuit card designating a task to be performed by the interface unit upon receiving the command signal from the management device; and
the software downloaded into the reconfigurable circuit card can be updated to alter the task to be performed by the interface unit upon receiving the command signal from the management device.

4. The weapon management system of claim 3, wherein updating the software downloaded into the reconfigurable circuit card comprises:
downloading updated software from an external source into the memory of the management device;
transferring the updated software from the management device to the electrically coupled interface unit;
receiving the updated software through the input port of the interface unit; and
storing the updated software in the memory of the interface unit for use by the processor of the interface unit.

5. The weapon management system of claim 1, wherein the weapon management system includes a plurality of interface units each electrically coupled to the management device, and wherein each of the plurality of interface units is electrically coupled to at least one armament.

6. The weapon management system of any preceding claim and further comprising:
a power network (18) electrically coupled to the management device (12), the interface unit (14), and the user interface (16); and
a communication network (20) electrically coupled to the management device (12), the interface unit (14), and the user interface (16).

7. The weapon management system of claim 6, wherein:
the power network (18) is configured to provide electric energy to each of the management device (12), the interface unit (14), and the user interface (16) to power each of the management device (12), the interface unit (14), and the user interface (16) during operation of the weapon management system; and
the communication network (20) is configured to transfer the command signals between each of the management device (12), the interface unit (14), and the user interface (16).

8. The weapon management system of claim 1, wherein a feedback data signal is sent from the interface unit (14) to the management device (12) after executing the command signal causing armament (22) action.

9. A method of operating a weapon management system to control operation of an armament, the method comprising:
receiving, by a user interface, input from a user;
transferring, through a communication network, a command signal from the user interface to an electrically coupled management device;
storing and processing, by the management device, the command signal received from the user interface;
transferring, through the communication network, the command signal from the management device to an electrically coupled interface unit;
storing and processing, by the interface unit, the command signal received from the management device; and
executing, by the interface unit, the command signal to cause an armament action.

10. The method of claim 9 and further comprising:
receiving, by the interface unit, the command signal from the management device through an input port of the interface unit;
storing, by the interface unit, the command signal from the management device within a memory of the interface unit;
processing, by the interface unit, the command signal from the management device within a processor of the interface unit; and
executing, by the interface unit, the command signal by sending an action signal through an output port of the interface unit to the armament.

11. The method of claim 10, wherein:
the processor of the interface unit includes a reconfigurable circuit card;
the reconfigurable circuit card includes software downloaded into the reconfigurable circuit card designating a task to be performed by the interface unit upon receiving the command signal from the management device; and
the software downloaded into the reconfigurable circuit card can be updated to alter the task to be performed by the interface unit upon receiving the command signal from the management device.

12. The method of claim 11, wherein updating the software downloaded into the reconfigurable circuit card comprises:
downloading, by the management device, updated software from an external source into a memory of the management device;
transferring, through the communication network, the updated software from the management device to the electrically coupled interface unit;
receiving, by the interface unit, the updated software through the input port of the interface unit; and
storing, by the interface unit, the updated software in the memory of the interface unit for use by the processor of the interface unit.

13. The method of claim 9 and further comprising:
generating and storing, by the interface unit, a feedback data signal indicating whether execution of the armament action was successfully completed;
transferring, through the communication network, the feedback data signal from the interface unit to the electrically coupled management device;
receiving, processing, and storing, by the management device, the feedback data signal from the interface unit;
transferring, through the communication network, a signal from the management device to the electrically coupled user interface; and
signaling, by the user interface, the outcome of execution of the armament action.

14. The method of claim 9, wherein:
the weapon management device further comprises a power network electrically coupled to the management device, the interface unit, and the user interface; and
the power network is configured to provide electric energy to each of the management device, the interface unit, and the user interface to power each of the management device, the interface unit, and the user interface during operation of the weapon management system.

15. The method of claim 9, wherein the weapon management system includes a plurality of interface units each electrically coupled to the management device, and wherein each of the plurality of interface units is electrically coupled to at least one armament.
